Europäisches Patentamt

European Patent Office

Office européen des brevets

(11) Publication number: **0 134 862**
**A1**

(12) **EUROPEAN PATENT APPLICATION**

(21) Application number: **83305684.9**

(22) Date of filing: **23.09.83**

(51) Int. Cl.⁴: **B 66 C 1/34**

(30) Priority: **26.07.83 JP 116720/83 U**

(43) Date of publication of application:
**27.03.85 Bulletin 85/13**

(84) Designated Contracting States:
**BE DE FR GB IT NL**

(71) Applicant: **Elephant Chain Block Company Limited
180, Oaza-Iwamuro
Sayama-cho Minamikawachi-gun Osaka(JP)**

(72) Inventor: **Ueno, Yoshio C/O Elephant Chain
Block Company Limited 180, Oaza-Iwamuro Sayama-cho
Minamikawachi-gun Osaka(JP)**

(74) Representative: **Szczuka, Jan Tymoteusz et al,
Cruikshank & Fairweather 19 Royal Exchange Square
Glasgow G1 3AE Scotland(GB)**

(54) **Load block for a hoist.**

㊼ This invention relates to a load block for a hoist which comprises a pair of load block segments (1) having abutting surfaces (10) each having a bearing housing recess (12) a support recess (13) for receiving a connection part (6) of said hoisting device, and a securing means (4) for securing said block segments (1) together with said abutting surfaces (10) in abutment with each other; a hook (2) having a shank (21) which has a head (24) and is housed within said bearing housing recess (12) of said block segments (10); a generally annular thrust bearing (3) held within said bearing housing recesses (12) and rotatably supporting said shank (21) of said hook (2); and a retaining collar (5) through which said head (24) is retained on said thrust bearing (3).

According to this invention, the retaining collar (5) comprises a pair of generally semi-circular segments and having an outer diameter larger than that of said head (24), each of said collar segments (5) having a respective part-tubular portion (51) formed and arranged so as to be received in an annular gap (23) between said bearing (13) and the outer peripheral surface of said shank (21).

FIG. I

## LOAD BLOCK FOR A HOIST

This invention relates to a load-block for a hoist, and more particularly to a load block comprising a block body supported to the load supporting end of a hoisting link chain carried by a load sheave of the hoist and a hook rotatably supported by the block body, the load sheave rotating normally or in reverse to hoist or lower a load hung from the hook.

Generally, this kind of load block comprises a matching pair of block segments and a hook having a shank supported rotatably between the block segments, the shank mounting a thrust bearing through which the hook is freely rotatable with respect to the block segments.

In this type of load block, as disclosed in Japanese Patent Laid-Open No. 56-12,292, the hook is supported on the load block in such a manner that the block segments are formed to define therebetween a bearing housing recess, the shank of the hook being provided with an annular groove, and an annular retaining collar cut in half and of a larger outer diameter than the inner diameter of a thrust bearing received in the annular groove, so that the shank is supported above the thrust bearing. A tubular buttomed cover is sleeved onto the collar and thrust bearing to prevent their escape from the shaft. Thus the conventional load block requires a cap as an additional component which results in the use of a larger number of parts in the manufacture of the load block, and considerable labour in the machining, assembly, and supervision of parts, and leads to a relatively high overall manufacturing cost.

It is an object of the present invention to avoid or minimize one or more of the above problems and in particular to provide a load block for a hoist, which utilizes a thrust bearing to retain the collar on a hook shaft, thereby minimizing the number of parts required and hence helping to lower the manufacturing costs.

The present invention provides a load block for a hoist, and mountable, in use, on a hoisting device, which load block comprises a pair of load block segments having abutting surfaces each having a bearing housing recess, a support recess for receiving a connecting part of said hoising device, and a securing means for securing said block segments together with said abutting surfaces in abutment with each other; a hook having a shank which has a head and is housed within said bearing housing recess of said block segments; a generally annular thrust bearing held within said bearing housing recesses and rotatably supporting said shank of said hook; and a retaining collar through which said head is retained on said thrust bearing; characterized in that said retaining collar comprises a pair of generally semi-circular segments and having an outer diameter larger than that of said head, each of said collar segments having a respective part-tubular portion formed and arranged so as to be received in an annular gap between said bearing and the outer peripheral surface of said shank.

Thus the load block for a hoist of the invention comprises; a pair of block segments having the abutting surfaces, a bearing bore and a support bore formed between the abutting surfaces, the support bore supporting a hoisting tackle, and a connection means for connecting the block segemnts abutting against each other; a hook having a headed shaft housed within the bearing bore; a ring-like-shaped thrust bearing supported rotatably into the bearing bore and rotably supporting the shaft; and a stopper for retaining the head to the thrust bearing. In this load block, an annular gap is provided between the inner periphery of the bearing and the outer periphery of the shaft near the head, the stopper comprises a pair of semicircular segments and is larger in diameter than the head, and the stopper segments each have a tubular portion cut in half and entering into the annular gap, so that the tubular portion is enclosed at the outer periphery thereof by the bearing and held to the shaft.

Accordingly, in a load block of the invention it is no longer necessary to provide a special cap, thereby reducing the number of components, facilitating supervision thereof, and improving tractability in and ease of assembly by virtue of the support of the retaining collar on the thrust bearing, with the result that the load block is inexpensive to produce as compared with conventional ones. Moreover, the retaining collar of the invention may be substantially disc-formwith an axially extending tubular portion to one side, but it is preferred to also provide on the retaining collar a retaining portion extending towards the head of the hook shank and having an inner diameter approximately equal to the outer diameter of the head. Hence, when the hoist is used to support a load, the collar is loaded and tends to deflect at its radially outward periphery. The retaining portion however engages the outer peripheral surface of the shank head to support the deflected part of the collar on the head, thereby preventing failure of the retaining collar and extending its useful life.

Further preferred features and advantages of the invention will appear from the following detailed description given by way of example of two preferred embodiments illustrated with reference to the accompanying drawings in which:

Fig. 1 is a longitudinal sectional view of a first load block of the invention;

Fig. 2 is a vertical section taken on the line II-II in Fig. 1;

Fig. 3 is a horizontal section taken on the line III-III in Fig. 1;

Fig. 4 is a perspective view of the stopper of the load block of Fig. 1 viewed from above;

Fig. 5 is a perspective view of the underside of the stopper of Fig. 4; and

Fig. 6 is a view corresponding to that of Fig. 1 of a second embodiment.

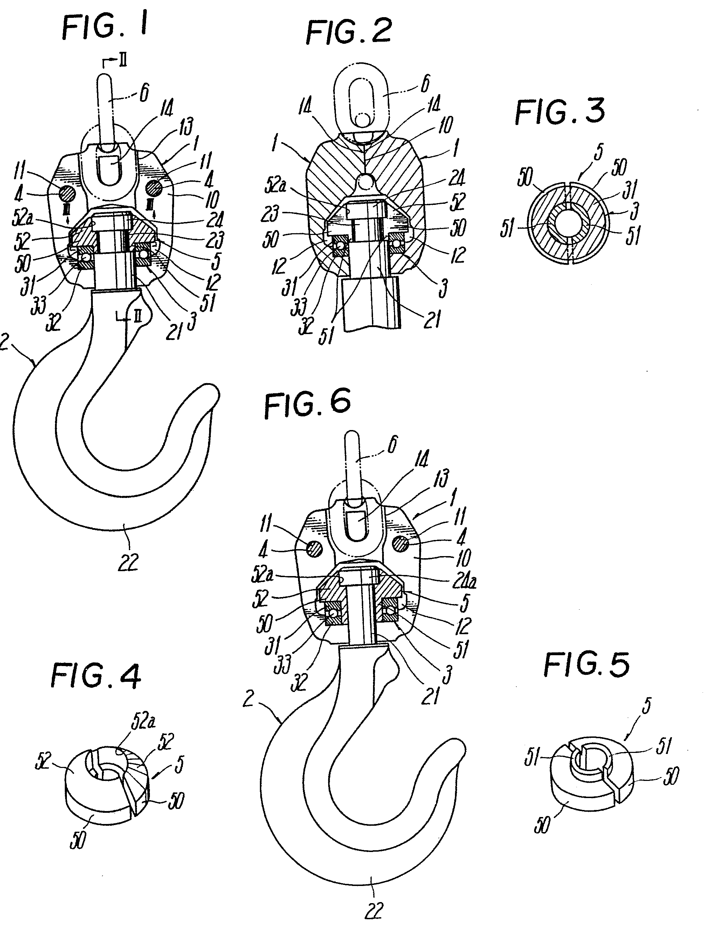

Fig. 1 shows a load block comprising a pair of block segments 1 each having an abutting surface 10, a hook 2 having a shank 21 and a hook body 22, a generally ring shaped thrust bearing 3 for rotatably supporting the hook shank 21 on the block segments 1, a connecting means comprising clamping screws 4 for connecting the block segments, and a retaining collar for retaining a head 24 of the shank 21 on the thrust bearing 3.

The block segments 1, as shown in Figs. 1 and 2 are of the same form and provided with through bores 11 for clamping screws 4, and recesses formed and arranged so as to define, between the abutting block segments, a bearing 12 and a support passage 13 for supporting one end of a hoisting tackle 6 conveniently in the form of a chain link, the clamping screws 4 acting to clamp together the block segments 1 at their abutting surfaces 10.

The bearing chamber 12 has at its lower end an annular recess portion for receiving therein the thrust bearing 3 and above this recess an enlarged diameter portion.

The shank 21 of the hook 2 may be uniform in diameter throughout its length, but it is preferred to provide an annular groove 23 as shown in Figs. 1 and 2 and a head 24 at the distal end of said shaft 21.

The thrust bearing 3 comprises an upper ring plate 31, a lower ring plate 32, and a plurality of balls 33, the ring plates 31.and 32 each having an inner diameter slightly larger than the shank 21 including the head 24, so that the shank 21 can pass through the bearing 3 during assembly of the hook 2.

When the bearing 3 is mounted on the shank 21, an annular gap is formed between the radially outer periphery of the shank 21 in the annular groove 23 and the radially inner periphery of each ring plate 31 or 32 of the bearing 3.

The retaining collar 5 is split into two equal collar segments 50 and is larger in its external diameter than the shank head 24, the collar segments 50 having semi-circular tubular portions 51 which are received in the annular gap between the bearing 3 and shank 21.

Each collar segment 50 is axially shorter than the width of the annular groove 23, at a position radially outwards of the latter (having a larger radial thickness), though inside the groove 23 the axial length of the collar segments 50, including their tubular portions 51, is adapted to substantially coincide with the axial width of the annular groove 23, so that the collar segments 50 are a more or less close fit, axially, in the annular groove 23.

Each semicircular tubular collar segment portion 51 has an outer diameter approximately equal to the inner diameter of the respective ring plates 31 and 32. When each collar segment 50 is engaged with the annular groove 23, the upper ring plate 31 is received around the outer periphery of the tubular portion 51 of the collar segment so that the semicircular tubular portions 51 are enclosed by the ring plate 31 and supported on the outer periphery of the shank 21.

The collar 5, as may be seen in more detail in Figs. 4 and 5, is provided at its opposite end remote from the tubular portions 51 with retaining portions 52 which extend towards the shank head 24, each having an outer diameter approximately equal to the outer diameter of the head 24, and are hemi-frustoconical. Alternatively, the retaining portions 52 could be hemi-cylindrical in continuation of the central collar portions 50.

The above described load block of the invention is assembled so that the thrust bearing 3 is first inserted onto the shank 21 over the shank head 24 of the hook 2 and shifted temporarily beyond the annular groove 23 towards the hooked body 22. The pair of collar segments 50 is then fitted into the annular groove 23 in an embracing manner, and thereafter the thrust bearing 3 is moved back towards the annular groove 23, so that the upper ring plate 31 fits around the semicircular tubular portions 51 and embraces them. By this means the collar segments 50 are restrained from radially outward movement by their tubular portion 51 being embraced by the upper ring plate 31 of the bearing 3, and    thus held securely on the shank 21 as long as the thrust bearing 3 is held stationary.

The shank 21 of the hook 2 with the retaining collar 5 held thereon is then fitted into a bearing bore 12 of one block segment, at which stage the collar segments 50, which are held on the shank 21 as explained above cannot escape therefrom. Hence, the shank 21 can be mounted in the bearing bore 12 radially, quickly and reliably. One end of the hoisting tackle 6 is now inserted through the support bore 13 of one load block segment 1 and retained by a land 14 provided in the bore 13, and thereafter the other load block segment 1 is abutted against the first segment 1 and secured thereto by the clamping screws 4.

When the hoist supports a load from its hook, the collar segments 50 are subjected to a loading through the shank head 24 so that there is a risk of breaking of the collar segments 50 as these are deflected upwardly at the outer periphery thereof. However, the abovementoned retaining portions 52 of this embodiment each abut at their radially inward peripheral surface 52a the outer periphery of the shank head 24, so that the collar segments 50 are restrained against deflection even when they are substantially loaded, thereby preventing failure of the collar segments 50. Accordingly, the retaining collar 5 has substantially improved durability with respect to a given load to be hoisted. Incidentally, the retaining segments 52 are not essential to the present invention.

Alternatively, the shank 21 could, as in the case of the second embodiment shown in Fig. 6, dispense with a separate annular groove and have a head 24 which is larger in diameter than the shank 21 and a thrust bearing 3 with an inner diameter larger than the outer diameter of the head 24 could be used, said bearing being mountable on the shank 21 over the head 24.

In this case, the semicircular tubular portions 51 are axially extended so that the whole of the thrust bearing 3 is mounted thereon thereby to hold the collar segments 50 to the shank 21.

Furthermore, the thrust bearing 3 is not restricted to being of the ball bearing type as in the preferred embodiments shown but may be, for example, a needle thrust bearing. In this case, the space required for accommodating the bearing may be reduced and thereby permit miniaturization of the block segments 1. Also the hoisting tackle 6 may be secured to the block via a bolt, extending across the support bore 13, in place of the lands 14.

## CLAIMS

1.    A load block for a hoist, and mountable; in use, on a hoisting device (6), which load block comprises a pair of load block segments (1) having abutting surfaces (10) each having a bearing housing recess (12), a support recess (13) for receiving a connection part (6) of said hoisting device, and a securing means (4) for securing said block segments (1) together with said abutting surfaces (10) in abutment with each other; a hook (2) having a shank (21) which has a head (24) and is housed within said bearing housing recess (12) of said block segments (10); a generally annular thrust bearing (3) held within said bearing housing recesses (12) and rotatably supporting said shank (21) of said hook(2); and a retaining collar (5) through which said head (24) is retained on said thrust bearing (3); characterized in that said retaining collar (5) comprises a pair of generally semi-circular segments and having an outer diameter larger than that of said head (24), each of said collar segments (5) having a respective part-tubular portion (51) formed and arranged so as to be received in an annular gap (23) between said bearing (13) and the outer peripheral surface of said shank (21).

2.    A load block according to claim 1, wherein said shank (21) of said hook (2) has an annular groove (23), said retaining collar (5) being formed and arranged so as to be received in said annular groove (23) the outer diameter of the tubular collar portion (51) being approximately equal to that of said shank (21).

3.    A load block for a hoist according to claim 1 or claim 2, wherein said retaining collar (5) is provided with retaining portions (52) each extending towards the head (24) of said shank (21) of said hook (2) and having an internal diameter approximately equal to the external diameter of said head (24).

0134862

1/1

FIG. 1

FIG. 2

FIG. 3

FIG. 6

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 230 004  (LOCK)<br>* Claim 1; figures 1, 4-6 * | 1 | B 66 C    1/34 |
| A | DE-C-  725 114<br>(MASCHINENBAU-AG)<br>* Claim; figure * | 1,2 | |
| A | CH-A-  426 153  (VON ROLL AG) | | |
| A | US-A-1 454 587  (GUNN) | | |
| A | US-A-2 585 408  (ROBERSON) | | |
| A | US-A-2 625 005  (MYERS) | | **TECHNICAL FIELDS SEARCHED (Int. Cl. 3)**<br><br>B 66 C    1/00<br>B 66 D    3/00<br>F 16 G   15/00 |
| D,A | JP-A-56 012 292<br>* Figures 1, 2 * | 1 | |

The present search report has been drawn up for all claims

| Place of search<br>BERLIN | Date of completion of the search<br>15-10-1984 | Examiner<br>KANAL P K |
|---|---|---|